# EUROPÄISCHE PATENTSCHRIFT

(11) **EP 0 596 322 B1**
(45) Veröffentlichungstag und Bekanntmachung des Hinweises auf die Patenterteilung: **18.12.1996**
(21) Anmeldenummer: 93116946.0
(22) Anmeldetag: 20.10.1993
(51) Int. Cl.: C09K 21/12, C09K 21/04

(54) **Brandschutzgläser, die besondere Gele enthalten und die Herstellung solcher Brandschutzgläser**
Fire-proof glasses containing particuliar gels and their preparation
Verres à protection contre le feu contenant des gels spéciaux et leur procédé de préparation

(30) Priorität: 02.11.1992 DE 4236936; 11.03.1993 DE 4307631
(43) Veröffentlichungstag der Anmeldung: 11.05.1994
(73) Patentinhaber: BAYER AG, 51368 Leverkusen (DE); Schott Glaswerke, 55122 Mainz (DE)
(72) Erfinder: Von Bonin, Wulf, Dr., D-51519 Odenthal (DE); Leroux, Roland, Dr., D-55271 Stadecken-Elsheim (DE); Karschti, Thomas M., D-55257 Budenheim (DE); Steigenberger, Markus, D-65474 Bischofsheim (DE)

(56) Entgegenhaltungen:
- EP-A- 0 306 677
- EP-A- 0 468 259
- EP-A- 0 527 401
- EP-A- 0 582 168
- US-A- 4 725 382
- US-A- 5 151 225
- US-A- 5 156 775
- DATABASE WPI Week 7646, Derwent Publications Ltd., London, GB; AN 76-85658 & JP-A-760 928 (ISHIKAWA) 28. September 1976
- DATABASE WPI Week 7646, Derwent Publications Ltd., London, GB; AN 76-85658 & JP-A-760 928

## Beschreibung

Die vorliegende Erfindung betrifft Brandschutzgläser mit Brandschutzgelen enthaltend Wasser, Aluminiumphosphat, Bor und ein Amin und die Herstellung von solchen Brandschutzgläsern unter Verwendung entsprechender Gelbildner.

Es ist bekannt, Brandschutzgläser herzustellen, indem man bei einem Verbund aus mehreren Scheiben die Zwischenräume zwischen den Scheiben mit einem wasserhaltigen Gel füllt (sogenannte Brandschutzverbundgläser).

Solche Brandschutz-Verbundglasscheiben sind seit längerem als sogenannte F-Verglasungen in Gebrauch. Sie bewirken, daß bei einseitiger Beflammung die feuerabgewandte Seite der Scheibe über eine gewisse Zeit den Raumabschluß gewährleistet und ihre Temperatur ca. 180°C nicht übersteigt. Sogenannte G-Verglasungen gewähren lediglich über eine gewisse Zeit den Raumabschluß.

Bekannte F-Verglasungen enthalten zwischen einzelnen Glasscheiben eine Schicht eines klaren, wasserhaltigen Gels in Form einer gegebenenfalls mehrlagigen Sandwich-Konstruktion. Im allgemeinen richtet sich die erreichbare Standzeit solcher Konstruktionen bei gegebenem Glastyp und gegebener Gelschichtdicke nach der Zahl der im Verbund enthaltenen einzelnen Gel-Zwischenschichten.

Als Gelschichten werden z.B. Alkalisilikat-Gele oder Gele aus wasserverträglichen, vernetzten organischen Polymeren, z.B. vom Polymethacrylsäure-Typ, eingesetzt. Diese Gele haben die Fähigkeit die jeweils angegebenen F-Standzeiten zu gewährleisten. Wenn im Beflammungsfalle jedoch die Gele bei hoher Temperatur dehydratisiert verbrannt bzw. aufgeschmolzen sind, dann wird die letzte flammabgewandte Scheibe des Verbundes besonders leicht aus dem Rahmen geschmolzen, denn es herrschen dann Temperaturen über 600°C, so daß über die F-Standzeit hinaus kein wesentlicher Stand für längeren Raumabschluß mehr gegeben ist. Das ist besonders auffällig bei der Verwendung der preiswerten Floatgläser und Alkalisilikat-Gelen. Ein Raumabschluß über die F-Standzeit hinaus wird aber angestrebt, um eine ausgedehnte Rest-Schutzwirkung zu bekommen.

Die EP-B 306 677 beschreibt als Brandschutzgele Kombinationen aus Monoaluminiumhydrogenphosphat und Borsäure im Gewichtsverhältnis von 10 bis 25 in Form von 80 gew.-%igen und höher konzentrierten Lösungen, die extrudierbaren, gelartigen Charakter haben, jedoch im Brandfall schmelzflüssig werden und aus der geborstenen Scheibe in den Flammraum auslaufen können, was die Schutzwirkung in Frage stellt.

Zur Vermeidung derartiger Schwierigkeiten wird in der DE-A 4 020 459 ein Gelsystem beschrieben, bei dem in einer Aluminiumphosphatlösung ein Acrylsäurederivat und ein Photoinitiator gelöst und diese Lösung nach Einbringen zwischen Glasscheiben durch Belichtung polymerisiert wird. Die durchzuführende Polymerisation und der zusätzliche Umgang mit Acrylmonomeren stellen eine unvorteilhafte Komplizierung dar. Außerdem neigt dieses Gelsystem zur Abscheidung von kristallinen Trübungen.

In DE-A 4 023 310 und DE-A 4 126 702 werden Brandschutzgele aus Aluminium-tris-phosphat-Ethanolamin-Salzen beschrieben, die u.a. für Brandschutz-Verbundglasscheiben eingesetzt werden können. Solche Gelschichten sind für die komplikationslose Herstellung von Brandschutz-Verbundglasscheiben gut geeignet, jedoch in Bezug auf das Schmelzverhalten im Beflammungsfalle noch verbesserungswürdig.

Gemäß einem eigenen älteren Vorschlag (DE-Anm. P 42 26 044.2) werden wäßrige Lösungen von Ethanolaminsalzen von Aluminiumphosphaten, mit 2 bis 5 Molen Borsäure (z.B. in Form ihrer Ethanolaminsalze) pro Mol Aluminiumphosphat modifiziert. Sollen solche Lösungen als Zwischenschicht für Brandschutz-Verbundglasscheiben eingesetzt werden, so werden nur bei Zusätzen von andersartigen Gelbildnern, z.B. Acrylamid, gute Ergebnisse erzielt. Der Borgehalt ist bei derartigen Systemen relativ hoch und auch hier stellt die praktische Notwendigkeit eines zusätzlichen Umganges mit Acrylmonomeren und deren Polymerisation eine Komplikation des Herstellungsprozesses für Brandschutz-Verbundglasscheiben dar.

Es wurden nun Brandschutzgläser gefunden, die von organischen Gelbildnern freie Gele enthalten und dadurch gekennzeichnet sind, daß sie mit Gelbildnern hergestellt wurden, die a) saure Aluminiumphosphate, gegebenenfalls in Form von Umsetzungsprodukten mit 0,01 bis 4 Mol Alkanolaminen pro Mol Aluminiumphosphat und b) Umsetzungprodukte von Borsäure mit Alkanolaminen enthalten, wobei a) und b), gerechnet als Feststoffe, im Gewichtsverhältnis 100:55 bis 100:0,5 vorliegen und die Gelbildner 0,5 bis 85 Gew.-% Wasser und Aluminium, Bor, Phosphor und Alkanolamin, insbesondere Monoethanolamin in atomaren bzw. molaren Verhältnissen von

| Al | B | P | Alkanolamin |
|---|---|---|---|
| 1 | 1,2 bis 1,8 | 2,3 bis 3,7 | 2,3 bis 3,7 |

enthalten. Diese Brandschutzgelbildner sind besser handhabbar als bisher bekannte.

Solche Gelbildner können durch Erwärmen in den Zwischenräumen eines Verbundes aus mehreren Scheiben in Gele überführt und so erfindungsgemäße Brandschutzgläser erhalten werden. Geeignete Temperaturen für die Gelbildung sind beispielsweise solche im Bereich von 45 bis 100°C.

Als Wassergehalt wird diejenige Menge Wasser verstanden, die bei Trocknung bei 80°C und Normaldruck bis zur Gewichtskonstanz entweicht. Da die letzten Wasseranteile nur schwierig aus dem System heraustrocknen, kann die Untergrenze des Wassergehalts (0,5 Gew.-%) nur als ca.-Zahl angegeben werden. Vorzugsweise beträgt der Wassergehalt 15 bis 60 Gew.-%.

Vorzugsweise beträgt das atomare bzw. molare Verhältnis von

| Al | B | P | Alkanolamin |
|---|---|---|---|
| 1 | 1,3 bis 1,7 | 2,4 bis 3,6 | 2,4 bis 3,6 |

und besonders bevorzugt

| | | | |
|---|---|---|---|
| 1 | 1,4 bis 1,6 | 2,8 bis 3,2 | 2,8 bis 3,2. |

Ganz besonders bevorzugt beträgt das atomare bzw. molare Verhältnis von

| Al | B | P | Alkanolamin |
|---|---|---|---|
| 1 | 1,5 | 3 | 3. |

Als saure Aluniniumphosphate kommen z.B. Aluminiumsalze von Sauerstoffsäuren des Phosphors in Frage, insbesondere von solchen des fünfwertigen Phosphors, die in wäßrigem Medium sauer reagieren. Bevorzugt sind Umsetzungsprodukte von einem Atom-Äquivalent Aluminium (Al³⁺) in Form von Aluminiumoxid und/oder Aluminiumhydroxid mit 2,3 bis 3,7, vorzugsweise mit 2,8 bis 3,2 Molen ortho-Phosphorsäure. Diese Umsetzungsprodukte können in wäßrigem Medium in Konzentrationen bis zu 90 Gew.-% vorliegen und sind dann klare Flüssigkeiten. Vorzugsweise beträgt die Konzentration derartiger Umsetzungsprodukte im wäßrigem Medium zwischen 50 und 85 Gew.-%.

Falls gewünscht kann man die Aluminiumphosphate im wäßrigen Medium in dieser Konzentration exotherm mit 0,01 bis 4 Molen Alkanolamin, bezogen auf 1 Mol Aluminiumphosphat, umsetzen.

Bevorzugte erfindungsgemäß einzusetzende Gele kann man beispielsweise herstellen, indem man zunächst eine zur Aluminiumphosphat-Bildung befähigte Aluminiumverbindung, insbesondere Aluminiumhydroxid, und eine zur Aluminiumphosphat-Bildung befähigte Phosphorverbindung, insbesondere ortho-Phosphorsäure, im gewünschten Al:P-Molverhältnis in Gegenwart von Wasser bei beispielsweise 70 bis 120°C zu einer Aluminiumphosphatlösung umsetzt. Diese kann beispielsweise einen Feststoffgehalt von mindestens 40 Gew.-%, vorzugsweise 70 bis 85 Gew.-% aufweisen. Vorzugsweise läßt man diese Lösung mindestens 2, besser 4 bis 40 Stunden bei 10 bis 40°C reifen.

Separat davon kann man dann eine zur Alkanolaminsalz-Bildung befähigte Borverbindung, insbesondere ortho-Borsäure, und ein Alkanolamin, insbesondere Ethanolamin, im gewünschten B:Alkanolamin-Molverhältnis in Gegenwart von Wasser zusammenbringen und dieser Lösung die, vorzugsweise gealterte, Aluminiumphosphatlösung im gewünschten Molverhältnis zusetzen. Unter mäßiger Erwärmung auf beispielsweise ca. 75°C bis 95°C entsteht dann eine Lösung erfindungsgemäß zu verwendender Brandschutzgelbildner. Diese ist nach Abkühlung auf z.B. unter 45°C gut lagerfähig und niedrigviskos. Die Bildung erfindungsgemäß einzusetzender Gele kann man zwischen den Glasscheiben eines aus zwei oder mehr Scheiben bestehenden Verbundes z.B. durch 3- bis 80-stündiges, vorzugsweise 10- bis 40-stündiges Erwärmen auf eine oder mehrere Temperaturen im Bereich von z.B. 45 bis 120°C, vorzugsweise 60 bis 95°C erreichen. Bei Temperaturen über 100°C kann es gegebenenfalls erforderlich werden, die Gelierung in einem geschlossenen System durchzuführen. Man kann die Gelbildung direkt mit frisch hergestellter Gelbildner-Lösung durchführen. Es ist aber bevorzugt, die Gelbildner-Lösung vor der Gelbildung mindestens 24 Stunden bei Raumtemperatur zu lagern.

Die Bor-Alkanolamin-Lösung kann beispielsweise 40 bis 100 Gew.-% Feststoffe enthalten und die Aluminiumphosphatlösung wird, vorzugsweise gegebenenfalls nach entsprechender Verdünnung, als 40 bis 75 Gew.-% Feststoffe enthaltende Lösung mit der Bor-Alkanolamin-Lösung zusammengebracht.

Die zu verwendenden Alkanolamine können auch Ethergruppen enthalten. Bevorzugt sind solche Alkanolamine, die durch Umsetzung von Aminen oder Ammoniak, vorzugsweise aliphatischen Aminen mit einer oder mehreren Aminogruppen oder Ammoniak mit bis zu 50 Mol Alkylenoxid, vorzugsweise Ethylenoxid und/oder Propylenoxid, pro NH-Gruppierung erhältlich sind. Besonders gut geeignet als Alkanolamin ist Monoethanolamin. Es können auch Amingemische Verwendung finden.

Gewünschtenfalls kann man für die Umsetzung von sauren Aluminiumphosphaten mit Alkanolaminen pro Atom-Äquivalent Aluminium (Al³⁺) 0,01 bis 4 Mol Alkanolamin verwenden. Vorzugsweise wird nicht mehr Alkanolamin verwendet, als zum Erreichen eines pH-Wertes von 8 (in wäßrigem, 50 gew.-%igem Medium) erforderlich ist. Im Falle von Aluminiumdihydrogenphosphat [Al(H₂PO₄)₃], kann man z.B. 2 bis 4 Mole, vorzugsweise 2,3 bis 3,7 Mole Monoethanolamin einsetzen.

Als Borsäure kommen im Prinzip alle Sauerstoffsäuren des Bors in Frage, insbesondere ortho-Borsäure, sowie Vorläufer davon, z.B. Boroxide und Boroxidhydrate, aus denen durch Hydrolyse ortho-Borsäure entstehen kann. Für die zur Umsetzung mit der Borsäure heranzuziehenden Alkanolamine gilt das zuvor für die Umsetzung mit Aluminiumphosphaten beschriebene entsprechend. Auch hier ist Monoethanolamin bevorzugt.

Pro Atom-Äquivalent Bor (B³⁺) in Form von Borsäure oder Borsäurevorläufern werden im allgemeinen 0,5 bis 4, vorzugsweise 1,3 bis 3,1 Mole Alkanolamin eingesetzt. Die Umsetzung kann wasserfrei erfolgen, sie erfolgt jedoch zweckmäßigerweise in einem wäßrigen Medium in solchen Konzentrationen, daß das Umsetzungsprodukt dann in einer Konzentration von 50 bis 100, vorzugsweise 60 und 100 Gew.-% in dem wäßrigen Medium vorliegt.

Erfindungsgemäß einzusetzende Gelbildner, die Umsetzungsprodukte von Aluminiumphosphaten mit Alkanolaminen und Borsäure mit Alkanolaminen enthalten, weisen vorzugsweise in beiden Umsetzungsprodukten jeweils das gleiche Amin bzw. Alkanolamin oder Alkanolamingemisch auf.

Eine weitere Verfahrensweise besteht darin, daß man zunächst aus einem sauren Aluminiumphosphat und einem Umsetzungsprodukt aus Borsäure und Alkanolamin in wäßrigem Medium eine gesonderte borhaltige Komponente herstellt, die auch Aluminium enthält, beispielsweise in einem molaren Verhältnis von Aluminium zur Bor (Al : B) wie 1:2 bis 1:10, vorzugsweise 1:3 bis 1:6, und diese dann in wäßrigem, beispielsweise 50 bis 70 gew.-%igem Medium mit weiterem saurem Aluminiumphosphat oder einem Umsetzungsprodukt aus saurem Aluminiumphosphat und Alkanolamin abmischt und zur Umsetzung bringt. Auch hierbei ist auf die Einhaltung der angegebenen Bruttogewichtsverhältnisse von Aluminium zu Phosphor zu Bor zu Alkanolamin, wie sie oben beschrieben wurden, zu achten.

Es ist auch möglich, jedoch weniger bevorzugt, ein in wäßrigem Medium vorliegendes Umsetzungsprodukt aus saurem Aluminiumphosphat und Alkanolamin mit entsprechenden Mengen Borsäure oder deren Vorläufern umzusetzen, wobei auch die erfindungsgemäß einzusetzenden Gelbildner mit der notwendigen Bruttozusammensetzung entstehen können. In vergleichbarer Weise kann man z.B. zunächst ortho-Phosphorsäure mit Alkanolamin umsetzen, dann Borsäure und dann Aluminiumhydroxid damit in wäßrigem Medium umsetzen, wobei letztlich auch ein erfindungsgemäß einzusetzender Gelbildner erhalten wird.

Das bedeutet, die Reihenfolge der Schritte, die zur Herstellung der erfindungsgemäß einzusetzenden Gelbildner führen, ist in breitem Rahmen variierbar.

Die Herstellungen der Aluminium enthaltenden Komponente und der Bor enthaltenden Komponente erfolgen vorzugsweise bei Temperaturen zwischen 20 und 100°C und in einem wäßrigen Medium, in dem die einzelne Komponente abschließend in einer Konzentration zwischen 50 und 85 Gew.-% vorliegt. Die Abmischung der Aluminium enthaltenden mit der Bor enthaltenden Komponente wird im allgemeinen bei 18 bis 95°C durchgeführt. Kurzfristig kann man gegebenenfalls bis auf ca. 100°C erhitzen. Eine allzu lange Erhitzung auf Temperaturen über 40°C ist bei allen Komponenten und Komponenten-Gemischen zu vermeiden, da sonst eine vorzeitige Gelierung oder Viskositätserhöhung eintreten kann.

Anstelle des vorzugsweise benutzten Zweitopfverfahrens, bei dem erst eine Aluminiumphosphatlösung und eine Bor-Alkanolamin-Salz-Lösung hergestellt und die beiden Lösungen dann durch Verrühren oder in einem kontinuierlich arbeitenden Mischaggregat vereinigt werden, können auch Eintopfverfahren angewendet werden.

Auch kann man zunächst mit hohen Feststoffkonzentrationen arbeiten und diese dann vor, während oder nach der Bildung der Gelbildner-Lösung durch Verdünnen herabsetzen.

Gegebenenfalls kann man den erfindungsgemäß einzusetzenden Gelen, den Ausgangsprodukten zu ihrer Herstellung oder den entsprechenden Gelbildnern Zusatzstoffe hinzufügen, beispielsweise Tenside, Haftvermittler, Farbgeber, Porenkeimbildner, Füllstoffe, Lichtschutzmittel, Oxidationsschutzmittel und/oder Verstärker, z.B. Fasern, Netze o.a. Solche Zusatzstoffe sind an sich bekannt.

Einer der wesentlichen Vorteile der erfindungsgemäß einzusetzenden Gelbildner liegt neben der Alkalifreiheit darin, daß ihre Viskosität auch bei Feststoffgehalten in wäßrigem Medium von über 60 Gew.-% deutlich unter der Viskosität eines entsprechenden borfreien Aluminiumphosphat/Alkanolamin-Gelbildners gleicher Konzentration liegt.

Das bedeutet, daß erfindungsgemäß einzusetzende Gelbildner eine bessere Lagerfähigkeit aufweisen und sich die Zwischenräume zwischen den Scheiben eines Scheibenverbundes wegen der verminderten Viskosität erheblich einfacher, schneller und blasenfreier füllen lassen als im Falle borfreier Gelbildner auf der Basis von Aluminiumphosphat. Dabei kann man gegebenenfalls unter Vakuum oder Schutzgas arbeiten, um Blasenbildung und/oder Verfärbungen zu vermeiden.

Bereits bei Zusatzmengen von ungefähr 10 Gew.-% der Borsäure/AlkanolaminKomponente (bezogen auf die Summe der Borsäure/Alkanolamin- und der Aluminiumphosphat-Komponente), erhält man einen Gelbildner mit stark verringerter Viskosität, der ein Gel bildet, das bei 80°C über 200 Stunden klar bleibt.

Die Gelbildner-Lösungen weisen eine gute Lagerfähigkeit auf, auch bei Temperaturen bis zu ca. 40°C. Die Gele bilden sich innerhalb von wenigen Stunden als klare, temperaturstabile Gele, die sich durch ein gutes mechanisches Stehvermögen auszeichnen und bei Beflammung bei Temperaturen im Bereich 100 bis 600°C überraschenderweise nicht zum Fließen neigen.

Im Gegensatz zu Gelen, die man ohne Zusatz der Bor-Alkanolamin-Umsetzungsprodukte oder unter Zusatz von zu geringen Mengen der Bor-Komponente oder unter Verwendung von zu großen Bor- oder Alkanolamin-Mengen erhält, neigen erfindungsgemäß einzusetzende Gele bei Temperaturen über 100°C nicht mehr dazu, eine fließende Schmelze zu bilden, die bei Beflammung wegfließen kann. Dies ist ein technisch wichtiger, überraschender Vorteil der erfindungsgemäß einzusetzenden Gele.

Man kann die einzelnen Komponenten auch auf andere Weise zusammengeben, etwa dann, wenn man ganz oder teilweise kontinuierlich und/oder in einem Eintopfverfahren arbeiten will. Beispielsweise kann man zunächst eine Umsetzung der Aluminiumphosphatlösung mit dem Alkanolamin vornehmen und dann die Borverbindung hinzufügen oder zunächst die Bor- und/oder Phosphorverbindung mit einem Alkanolamin umsetzen und dann z.B. frisch gefälltes Aluminiumhydroxid hinzufügen.

Weiterhin weisen erfindungsgemäß einzusetzende Gele eine verbesserte feinporige Intumeszenz auf. Die Gelbildner-Lösungen haben relativ geringe Viskositäten auch bei Feststoffkonzentrationen von über 65 Gew.-%. Auch bei Verdünnungen auf weniger als 40 Gew.-% Feststoffgehalt sind sie noch gelierfähig und weisen im allgemeinen moderate pH-Werte zwischen 5 und 6 auf. Die daraus gebildeten, von zusätzlichen Gelbildnern freien Gele haben eine deutlich verminderte Rißbildungtendenz und neigen bei erhöhten Temperaturen nicht zum Fließen, so daß der hydrostatische Druck von den Scheibenverbunden auch bei schwächeren Scheiben gut aufgefangen werden kann. Neben der guten Lagerungsbeständigkeit bei konstanten, auch erhöhten Temperaturen haben die Gele auch eine gute Wechseltemperaturlagerbeständigkeit, beispielsweise bei zwischen -18°C, +20°C und +80°C schwankenden Temperaturen. Schließlich sind die hohen F- und insbesonders G-Standzeiten erwähnenswert, die erfindungsgemäße Brandschutzgläser aufweisen.

Erfindungsgemäße Brandschutzgläser können die einzusetzenden Gele in getrockneter oder wasserhaltiger Form enthalten.

Die erfindungsgemäß einzusetzenden Gelbildner und Gele können gegebenenfalls zusätzlich z.B. Tenside, z.B. fluororganische, nichtionische und/oder ionische Tenside, Zusätze von sonstigen Hilfsstoffen, etwa Zuckern oder Polyalkoholen zur Beeinflussung des Intumeszenzverhaltens im Brandfalle oder Hilfsstoffe zur Verbesserung der Haftung des Gels auf Glasscheiben, sowie Farbgeber und/oder Stabilisatoren gegen Licht und Strahlung enthalten. Die Wassergehalte vor und nach der Gelierung liegen im allgemeinen unter 50 Gew.-%, vorzugsweise zwischen 20 und 40 Gew.-%. Die Gele können in den verschiedenen Zwischenräumen eines Scheibenverbundes gleiche oder unterschiedliche Zusammensetzungen der Feststoffe und der Wassergehalte aufweisen.

In speziellen Fällen ist es auch möglich, einen erfindungsgemäß einzusetzenden Gelbildner auf eine Glasscheibe aufzubringen und dort, also nicht in einem Scheibenzwischenraum, sondern auf einer Glasoberfläche, zu gelieren und/oder zu trocknen. Bei Temperaturen zwischen Raumtemperatur und 150°C, vorzugsweise zwischen 80 und 120°C können dann auch niedrigere Wassergehalte als 20 Gew.-% auf einfache Weise realisiert werden.

Bei den erfindungsgemäßen Brandschutzgläsern ist es von wesentlicher Bedeutung, daß zunächst eine bei Raumtemperatur lagerstabile Gelbildner-Lösung hergestellt werden kann, die dann nach Einfüllen zwischen die Glasscheiben eines Scheibenverbundes ohne weitere Zusätze durch Erwärmen über wenige Stunden hinweg in ein stabiles Gel überführbar ist.

Die Summe der Vorteile der vorliegenden Erfindung stellt einen beträchtlichen technischen Fortschritt auf dem Gebiet der Brandschutzgläser dar.

Bei der Herstellung erfindungsgemäß einzusetzender Gele kann man gegebenenfalls zusätzlich zu oder anstelle des bevorzugten Aluminiumhydroxids auch andere Aluminiumverbindungen einsetzen, die sich in Aluminiumphosphate überführen lassen, beispielsweise Aluminiumoxide, Aluminiumoxidhydrate, Aluminiumsalze flüchtiger Säuren (etwa Aluminiumchloride, -carbonate oder -acetate) oder Aluminiumborate. Zusätzlich zu Aluminiumverbindungen können gegebenenfalls, z.B. bis zu 20 Mol-%, bezogen auf Aluminium, andere Metallverbindungen eingesetzt werden, z.B. solche der 1. bis 4. Hauptgruppe des periodischen Systems der Elemente und/oder von Eisen, Cobalt und/oder Nickel.

Zusätzlich zu oder anstelle der bevorzugten ortho-Phosphorsäure kann man gegebenenfalls andere Phosphorverbindungen einsetzen, die sich in Aluminiumphosphate überführen lassen, beispielsweise dehydratisierte Formen der ortho-Phosphorsäure, Phosphoroxide, Phosphonsäuren, Phosphinsäuren, Phosphorsäureester und/oder Phosphorsäuresalze, letztere z.B. als Ammonium- und/oder Alkanolaminsalze.

Zusätzlich zu oder anstelle der bevorzugten ortho-Borsäure kann man gegebenenfalls andere Borverbindungen einsetzen, z.B. dehydratisierte Formen der ortho-Borsäure, Boroxide, Ammoniumborate und/oder Borate sonstiger Amine, insbesondere Alkanolaminborate.

Zusätzlich zu oder anstelle des bevorzugten Ethanolamins kann man gegebenenfalls andere Alkoxylierungsprodukte des Ammoniaks wie Diethanolamin und Triethanolamin und/oder andere Aminverbindungen einsetzen, z.B. Ammoniak, Ethylendiamin, Polyalkylenpolyamine, Piperazine und/oder Morpholine.

Als Gläser für erfindungsgemäße Brandschutzgläser kommen anorganische und organische Gläser des Standes der Technik in Frage, z.B. Natron-Kalkgläser, Floatgläser, Bor enthaltende Silikatgläser, Glaskeramik, Polymethacrylatgläser, Polycarbonatgläser, Polyolefingläser.

Bei erfindungsgemäß einzusetzenden Gelbildnern und Gelen ist kein Monomerzusatz (Acrylamid) nötig und Komplikationen durch dessen Handhabung und Polymerisation entfallen. Trotzdem kann man in Betracht ziehen, erfindungsgemäß einzusetzende Gelbildner und Gele gegebenenfalls mit anderen Gelbildnern oder Gelen zu kombinieren, z.B. mit (Poly)-Acrylamid, Polyvinylalkohol, Stärke, Gelatine, Eiweißstoffen oder Montmorilloniten.

Die Gelbildner-Lösungen können vor der Gelierung gegebenenfalls weiter verdünnt werden. Bevorzugt als Verdünnungsmitel ist Wasser, es ist auch der Zusatz von mit Wasser mischbaren organischen Lösungsmitteln, zumindest anteilsweise, möglich.

Neben den schon genannten Zusatzstoffen kommen auch Zusätze von carbonisierenden Polyalkoholen, z.B. Zuckern, Glykolen, Glycerin, Pentaerythrit und/oder Polyvinylalkohole und sonstige wasserlösliche oligomere oder polymere Zusätze in Betracht. In speziellen Fällen, sofern keine klaren Gelschichten erforderlich sind, kann man auch Polymerdispersionen mit erfindungsgemäß einzusetzenden Gelen oder Gelbildner-Lösungen mischen. Haftvermittler, Tenside, Lichtschutzstabilisatoren, UV- und IR-Filtersubstanzen sowie farbgebende Zusätze werden gegebenenfalls z.B. unter 3 Gew.-%, vorzugsweise unter 1 Gew.-%, bezogen auf das erfindungsgemäß einzusetzende Gel, zugesetzt. Füllstoffe und carbonisierende Zusätze können gegebenenfalls z.B. in Mengen von 1 bis 75 Gew.-%, vorzugsweise 20 bis 60 Gew.-%, bezogen auf die Gesamtmischung, zum Einsatz kommen.

Im folgenden wird die Erfindung beispielhaft erläutert. Die angegebenen Teile und Prozente beziehen sich auf das Gewicht, sofern nichts anderes vermerkt ist.

### Beispiele

### Beispiel 1

Eine 55 %ige Lösung von 1 Mol Aluminiumphosphat in Form eines bei 100°C in Wasser hergestellten Umsetzungsproduktes aus 1 Mol Aluminiumhydroxid mit 3 Molen 85 %iger ortho-Phosphorsäure wurde mit 3,1 Mol Ethanolamin, beginnend bei 20°C, verrührt. Die Temperatur stieg dabei auf 75°C an. Nach wenigen Minuten wurde die Lösung klar und auf 20°C abgekühlt. Der Feststoffgehalt betrug 66 Gew.-%. Nach 16 Stunden bei 20°C wurde eine Viskosität von 3800 mPa.s gemessen (Hake Viskotester VT 02/1).

In Wasser wurde eine 66 %ige Lösung des Umsetzungsproduktes aus 1 Mol ortho-Borsäure und 1 Mol Monoethanolamin hergestellt.

Nun wurden 9 Teile der Aluminium enthaltenden Lösung und 1 Teil der Bor enthaltenden Lösung bei Raumtemperatur vermischt und eine klare Lösung erhalten. Diese wurde 16 Stunden bei 20°C gelagert und dann die Viskosität wie oben bestimmt. Sie betrug 630 mPa.s.

Danach wurde die Mischung in eine Glasflasche gefüllt und in einen auf 80°C geheizten Heizschrank gestellt. Nach 4 Stunden war das Material geliert, nach 12 Stunden wurde es aus dem Heizschrank entnommen und abgekühlt. Es hatte sich ein klares stabiles Gel gebildet.

Anschließend wurde die Flasche mit dem Gel noch einmal in den auf 80°C geheizten Heizschrank gebracht und 180 Stunden darin belassen. Danach wurde abgekühlt. Es konnte keine Eintrübung des Gels festgestellt werden.

### Beispiel 2

Es wurde zunächst eine 70 %ige Lösung von 1 Mol Aluminiumdihydrogenphosphat in Wasser hergestellt. Dazu wurde bei 50°C eine 70 %ige Lösung des Umsetzungsproduktes von 5 Molen ortho-Borsäure und 5 Molen Monoethanolamin hinzugefügt. Unter leichter Erwärmung wurde eine klare Lösung erhalten, die auf einen Gehalt von 66 % verdünnt wurde. Dann wurde sie in den tabellarisch aufgeführten Verhältnissen mit der 66 %igen Lösung einer Aluminiumphosphat/Ethanolamin-Komponente (hergestellt wie in Beispiel 1) abgemischt, wobei anschließend die ebenfalls angeführten Viskositäten wie im Beispiel 1 gemessen wurden.

| | | | | | |
|---|---|---|---|---|---|
| % Aluminium enthaltende Komponente | *) 100 | 90 | 80 | 70 | *)50 |
| % Bor enthaltende Komponente | - | 10 | 20 | 30 | 50 |
| Viskosität (mPa.s bei 20°C) | 3800 | 1080 | 870 | 700 | 580 |

| | | | | | |
|---|---|---|---|---|---|
| *) zum Vergleich | | | | | |

Alle diese Mischungen wurden getrennt 24 Stunden in einen auf 80°C erhitzten Heizschrank gebracht und danach abgekühlt. Dabei zeigte sich, daß alle Proben, bis auf die 50 %/50 %-Probe ein klares steifes Gel gebildet hatten. Die 50 %/50 %-Probe ließ sich auch bei längerer Beheizung nicht gelieren.

Die beiden erstgenannten Proben (100 %/0 % und 90 %/10 % wurden für weitere 180 Stunden bei 80°C gehalten. Es waren keine Veränderungen feststellbar. Das bedeutet, daß die verbesserte Handhabbarkeit infolge niedrigerer Viskosität nicht mit einer Verschlechterung der Alterungsbeständigkeit einhergeht.

### Beispiel 3

Je eine Dreischeiben-Verbundglas-Konstruktion aus 3 mm Floatglasscheiben mit zwei Zwischenräumen von je 3 mm lichter Weite wurde mit der zweiten Lösung aus Beispiel 2 (90 %/10 %-Gemisch) und mit der ersten Lösung aus Beispiel 2 (100 %/0 %-Gemisch) gefüllt. Es zeigte sich, daß das Füllen mit der zweiten Lösung wesentlich schneller und leichter blasenfrei durchgeführt werden konnte als mit der ersten Lösung.

Dann wurde die Verbundglaskonstruktion enthaltend die zweite Lösung durch Erhitzen auf 90°C für 12 Stunden geliert.

Danach wurde die 30 x 30 cm messende Verbundglaskonstruktion, die die zweite Lösung enthielt, in einen in Anlehnung an DIN 4102 arbeitenden Kleinbrand-Testofen eingebaut und nach der Einheitstemperaturkurve beflammt. Nach ca. 100 Sekunden begann sich die Scheibe zu trüben, nach 5 Minuten war die Strahlungssperre durch Eintrübung voll erreicht. Nach 30 Minuten Beflammzeit lag die Durchschnittstemperatur der von der Flamme abgewandten Seite der Verbundglaskonstruktion noch unter 180°C (Infrarot-fotometrische Messung), nach 120 Minuten war der Raumabschluß noch gewahrt, wobei die Durchschnittstemperatur auf der Außenfläche bei 640°C und die Ofentemperatur bei 1000°C lag.

### Beispiel 4

### Herstellung einer Al-Phosphatlösung (nicht erfindungsgemäß)

624 Teile Hydrargillit (technisches Aluminiumhydroxid) wurden in 2766 Teilen 85 %ige ortho-Phosphorsäure (Molverhältnis Al:P 1:3) und 262 Teile Wasser eingetragen und bei 100 bis 110°C 4 Stunden verrührt. Es entstand eine klare Lösung mit einem Feststoffgehalt von 70 %. Diese wurde mit 279 Teilen Wasser auf 65 % verdünnt und auf Raumtemperatur abgekühlt. Im folgenden wird diese Lösung als AP-Lösung bezeichnet.

### Beispiel 5

### Herstellung einer Lösung eines Borsäure-Ethanolamin-Komplexes (nicht erfindungsgemäß)

In 1187,6 Teilen Wasser wurden 741,6 Teile ortho-Borsäure dispergiert und mit 1464 Teilen Ethanolamin (Molverhältnis B:Amin 1:2) unter gutem Rühren versetzt. Hierbei erfolgte ein Temperaturanstieg auf etwa 45°C, und es bildete sich eine klare, 65 %ige Lösung. Die Lösung wurde auf Raumtemperatur abgekühlt. Im folgenden wird diese Lösung als BE-Lösung bezeichnet.

### Beispiel 6

### Herstellung eines borfreien Komplexes aus der AP-Lösung und Ethanolamin im Molverhältnis Al:P:Amin = 1:3:3 zu Vergleichszwecken (nicht erfindungsgemäß)

625 Teile der AP-Lösung (nach 40-stündiger Lagerung bei Raumtemperatur) wurden mit Wasser auf 55 % verdünnt. Dann wurden unter gutem Rühren 210 Teile Ethanolamin hinzugegeben. Das Reaktionsgemisch erwärmte sich auf 75°C und bildete eine klare Lösung. Die Lösung wurde im Verlauf von 15 Minuten auf Raumtemperatur abgekühlt und mit 17 Teilen Wasser auf einen Feststoffgehalt von 65 % eingestellt. Nach einer Reifung von 30 Stunden bei Raumtemperatur hatte die Lösung eine mit dem Haake-Viscotester bei 20°C gemessene Viskosität von 3500 mPa.s Im folgenden wird diese Lösung als APE-Lösung bezeichnet.

### Beispiel 7

### Herstellung einer erfindungsgemäß einzusetzenden Gelbildner-Lösung

212 Teile BE-Lösung wurden in einem Rührtopf vorgelegt und unter gutem Rühren bei 85°C mit 244,6 Teilen AP-Lösung (gereift 4 Stunden bei Raumtemperatur) versetzt. Das Molverhältnis war 2:3, entsprechend der Zusammensetzung AlB_{1,5}P₃Amin₃. Man erhielt unter Erwärmen auf 70°C eine klare, 65 %ige Gelbildnerlösung, die sofort auf Raumtemperatur abgekühlt wurde. Nach einer Reifung von 24 Stunden bei Raumtemperatur hatte die Lösung, gemessen mit dem Haake-Viscotester, bei 20°C eine Viskosität von 600 mPa.s. Im folgenden wird diese Lösung als APBE-Lösung bezeichnet.

Aus der gemessenen Viskosität ersieht man die Viskositätsabsenkung gegenüber der gleich konzentrierten, borfreien Lösung des Beispiels 6.

### Beispiel 8 (nicht erfindungsgemäß)

### Gelierung der APE-Lösung, der AP-Lösung und der BE-Lösung zu Vergleichszwecken

Je ein Reagenzglas wurde zur Hälfte mit der BE-Lösung, der AP-Lösung (40 Stunden bei Raumtemperatur gealtert) und mit der APE-Lösung (40 Stunden bei Raumtemperatur gealtert) gefüllt und verschlossen. Dann wurden die drei Reagenzgläser waagerecht gelegt und 12 Stunden bei 80°C getempert. Nach dieser Zeit waren die BE-Lösung und die AP-Lösung noch flüssig, während die APE-Lösung zu einem mechanisch stabilen, klaren Gel geliert war, welches bei senkrechter Stellung des Glases bei Raumtemperatur nicht zusammenlief (im folgenden wird das letztere Gel als Gel 8 bezeichnet).

Auch bei längerer Temperung gelierten die AP-Lösung und die BE-Lösung nicht.

### Beispiel 9

### Gelierung der erfindungsgemäß einzusetzenden Gelbildner-Lösung APBE

Es wurde analog Beispiel 8 mit der APBE-Lösung aus Beispiel 7 verfahren. Man erhielt ebenfalls ein klares, mechanisch stabiles Gel, das bei Senkrechtstellung sowohl bei Raumtemperatur als auch bei 80°C nicht zusammenlief (im folgenden wird dieses Gel als Gel 9 bezeichnet).

### Beispiel 10

Vergleich des Schmelzverhaltens von Gel 8 und Gel 9
a) Die entsprechend den Beispielen 8 und 9 erhaltenen, in waagerechter Lage halb mit standstabilem Gel gefüllten Reagenzgläser wurden senkrecht gestellt und seitlich mit einem beheizten Luftstrom beaufschlagt, dessen Temperatur innerhalb von 30 Sekunden von 20 bis 300°C anstieg und dann bei 300°C blieb (Thermofön). Dabei wurde das Schmelzverhalten der Gele beurteilt:
   Das Gel 8 schmolz innerhalb von 30 Sekunden und floß am Boden des senkrecht stehenden Reagenzglases zu einer blasenwerfenden Schmelze zusammen. Nach 1 Minute war der größte Teil des Gels zu einer Schmelze am Boden des Reagenzglases zusammengelaufen.
   Bei Gel 9 erfolgte kein Schmelzen und Zusammenlaufen. Bei der thermischen Beanspruchung bildeten sich im Gel, ohne daß dieses flüssig ablief, viele kleine Risse und Bläschen. Im Verlaufe von 60 Sekunden war das gesamte Gel, ohne abzulaufen, zu einer mit feinen Blasen durchsetzten Masse intumeszent aufgetrieben worden.
b) Die gleichen Phänomene wurden beobachtet, als in einem entsprechenden Versuch die Temperatur des Heißluftstroms bis auf 500°C gesteigert wurde.
   Die Versuche a) und b) zeigen die gute Schmelzstabilität des erfindungsgemäß einzusetzenden Gels, das es für die Herstellung von Brandschutzgläsern besonders geeignet macht.

### Beispiel 11

### Kontinuierliche Herstellung einer erfindungsgemäß einzusetzenden Gelbildner-Lösung

Eine Dosierpumpe förderte 74 Volumenteile pro Minute einer 25 Stunden bei Raumtemperatur gealterten AP-Lösung. Eine zweite Dosierpumpe förderte 94 Volumenteile pro Minute einer 25 Stunden bei Raumtemperatur gealterten BE-Lösung.

Beide Dosierpumpen arbeiteten auf einen Rührwerksmischkopf zu, wie er für die Polyurethanherstellung üblich ist. In dem hochtourig laufenden Mischkopf wurden die Komponenten sehr schnell und sehr intensiv vermischt. Hinter dem Mischkopf befand sich eine 10 m lange Transportleitung, die in der Mitte einen Statikmischer aufwies, durch den das Reaktionsgemisch nachvermischt wurde. Dann floß das klare farblose Reaktionsgemisch über einen Kühler und mit etwa 35°C in Vorratsgefäße, in denen es auf Raumtemperatur abkühlte.

Im Gelierversuch analog Beispiel 9 wurde ein klares Gel erhalten, das in seinen Eigenschaften dem gemäß Beispiel 9 getesteten Gel entsprach.

### Beispiel 12

### Herstellung eines erfindungsgmäßen Brandschutzglas-Verbundes

Es wurden mit Silikon-Dichtungsmasse versiegelte Dreischeibenverbunde der Maße 50 x 50 x 1,5 cm hergestellt und senkrecht zwischen zwei Stahlplatten fixiert. Der Aufbau des Verbundes war: 3 mm Floatglas/3 mm Zwischenraum/3 mm Floatglas/3 mm Zwischenraum/3 mm Floatglas.
a) Die Zwischenräume des Verbundes wurden mit der APE-Lösung (siehe Beispiel 6) gefüllt.
b) Die Zwischenräume eines zweiten Verbundes wurden mit der APBE-Lösung (siehe Beispiel 7) gefüllt.

Dann wurden beide Verbunde in fixierter Form in einen Heizschrank eingebracht und 25 Stunden bei 80°C getempert. Dann ließ man im Verlauf von 10 Stunden abkühlen. Die so hergestellten Brandschutz-Verbundgläser waren klar durchsichtig. Durch das entstandene, mechanisch stabile Gel neigten sie auch nicht zu Verformungen durch einen hydrostatischen Druck der Füllungen.

Ein 50-maliger Temperatur-Wechsellagerungstest (jeweils 10 Stunden bei -10°C, Raumtemperatur und 80°C) ließ keine Beeinträchtigung der Verbundgläser erkennen.

### Vergleich:

Die beiden Verbunde 12a) und 12b) wurden nach 2-monatiger Lagerung bei Raumtemperatur in einen in Anlehnung an DIN 4102 mit der Einheits-Temperaturkurve betriebenen Kleinbrandofen eingebaut. Dann wurde der Beflammungsversuch gestartet.

In beiden Fällen bekam die flammseitige Glasscheibe nach etwa 1 bis 2 Minuten Sprünge. Nach etwa 3 Minuten war jeweils eine Trübung der Scheibe deutlich erkennbar.

Nach ca. 6 Minuten war bei 12a) ein Fließen und die Bildung schwimmender Blasen erkennbar, nach 10 Minuten war der Inhalt des flammenseitigen Zwischenraumes teilweise ausgelaufen, er begann sich jedoch durch intumeszentes Aufschäumen der Füllung wieder teilweise aufzufüllen. Nach ca. 15 Minuten bekam die mittlere Scheibe Sprünge, begann die zweite Gelschicht zu schmelzen, und er wiederholten sich die gleichen Erscheinungen.

Inzwischen war auch die flammabgewandte Scheibe undurchsichtig geworden. Es bildeten sich jedoch einige Hitzenester auf der Scheibenoberfläche, was durch Abtasten mit einem IR-Meßgerät festgestellt wurde. Im Bereich dieser Hitzeflecken wurden nach 27 Minuten Temperaturen von über 160°C gemessen. Die Durchschnittstemperatur des Verbundes 12a) erreichte nach 34 Minuten Werte über 180°C.

Beim Verbund 12b) zeigten sich nach 6 Minuten, ohne erkennbare Fließ- oder Auslaufprozesse zunehmend feine Blasen in der Gelschicht, die über die gesamte Versuchsdauer hinweg zunehmend den Charakter eines feinporigen Schaumes annahmen. Etwa ab 15 Minuten Versuchsdauer erfolgte dieser Schäumprozeß auch in der zweiten Gelschicht. Auch nach 25 bis 30 Minuten Brenndauer zeigten sich auf der Scheibenoberfläche keine ausgesprochenen Hitzeflecken. Nach 43 Minuten erreichte die äußere Scheibenoberfläche eine Durchschnittstemperatur von 180°C. Der Verbund 12b) war nunmehr mit einem feinporigen Schaum angefüllt.

Beide Scheibenverbunde stellten noch nach 120 Minuten Brenndauer einen vollständigen Raumabschluß dar. Der Versuch wurde dann abgebrochen und die flammseitige Front nach der Abkühlung beurteilt.

Bei 12a) zeigte sich, daß wesentliche Anteile der ursprünglichen Gelfüllung aus den geborstenen Scheiben ausgelaufen, in den Brandraum übergetreten und dort verglast waren. Auf den erhaltenen Teilen der Glasscheiben hatte sich die restliche Schicht der Gelschmelze unter Keramisierung verfestigt und so das Schmelzen der Frontscheibe verhindert, wodurch der Raumabschluß erhalten blieb.

Bei 12b) zeigte sich, daß nahezu kein Material in den Brandraum ausgelaufen war und das die gesamte flammseitige Fläche eine Art feinporiges Schaumstoffkissen plus keramisiertem Material darstellte. Dadurch kann der Raumabschluß über nahezu beliebig lange Zeiträume erhalten werden.

Diese Brandversuche zeigen die deutlich verbesserte Eignung von erfindungsgemäß einzusetzenden Gelen für Brandschutz-Gelzwischenschichten bei Brandschutzgläsern (siehe jeweils 12b)).

### Beispiel 13

### Herstellung und Test von Scheibenverbunden

a) Eine 50 x 50 x 0,3 cm messende Floatglasscheibe wurde mit der gemäß Beispiel 7 erhalten APBE-Lösung begossen und die so vorgenommene Beschichtung bei 90°C aufgetrocknet. Die hergestellte klebfreie Beschichtung der Scheibe war klar und schlierenfrei, die Dicke der Beschichtung betrug 0,55 mm. Dann wurde die Scheibe mit der Beschichtung zur Flammenseite hin und eine unbeschichtete Vergleichsscheibe in einen Kleinbrandofen eingebaut und der Ofen im Verlauf von 15 Minuten mit Heizgas auf 100°C aufgeheizt. Es erfolgte kein Springen der Scheiben. Nunmehr wurde die Ofentemperatur im Verlauf von 2 Stunden langsam auf 1000°C erhöht.
   Beim Erreichen von 700°C begann die unbeschichtete Floatglasscheibe zu fließen und der Raumabschluß ging verloren. Die beschichtete Floatglasscheibe dagegen überzog sich flammseitig mit einer keramisierten und schaumartig aufgeblähten Schicht und stellte so nicht nur eine Strahlungsbarriere dar, sondern bewahrte auch den Raumabschluß bei 1000° für mehr als 30 Minuten.
b) Versuch a) wurde wiederholt. Dabei wurde jedoch ein entsprechender Zweischeibenverbund eingesetzt, bei dem die Beschichtung der einfachen Scheibe bis zu einer Restfeuchte von 15 % (bei 80°C gemessen) getrocknet und dann bei 50°C die zweite Scheibe aufgepreßt wurde.

Auch in diesem Falle wurde der Raumabschluß bei 1000°C über mehr als 30 Minuten bewahrt.

## Patentansprüche

1. Brandschutzgläser, die von organischen Gelbildnern freie Gele enthalten, dadurch gekennzeichnet, daß sie mit Gelbildnern hergestellt wurden, die
a) saure Aluminiumphosphate, gegebenenfalls in Form von Umsetzungsprodukten mit 0,01 bis 4 Mol Alkanolaminen pro Mol Aluminiumphosphat und
b) Umsetzungsprodukte von Borsäure mit Alkanolaminen enthalten,
wobei a) und b), gerechnet als Feststoffe, im Gewichtsverhältnis 100:55 bis 100:0,5 vorliegen und die Gelbildner 0,5 bis 85 Gew.-% Wasser und Aluminium, Bor, Phosphor und Alkanolamin, insbesondere Monoethanolamin in atomaren bzw. molaren Verhältnissen von
| Al | B | P | Alkanolamin |
|---|---|---|---|
| 1 | 1,2 bis 1,8 | 2,3 bis 3,7 | 2,3 bis 3,7 |
enthalten.

2. Brandschutzgläser nach Anspruch 1, dadurch gekennzeichnet, daß die Gelbildner bzw. Gele Tenside, Haftvermittler, Farbgeber, Porenkeimbildner, Füllstoffe, Lichtschutzmittel, Oxidationsschutzmittel und/oder Verstärker enthalten.

3. Brandschutzgläser nach Ansprüchen 1 und 2, dadurch gekennzeichnet, daß sie Gele in getrockneter Form enthalten.

4. Brandschutzverbundgläser nach Ansprüchen 1 und 2, dadurch gekennzeichnet, daß sie Gele in wasserhaltiger Form enthalten.

5. Brandschutzverbundgläser nach Ansprüchen 1 bis 4, dadurch gekennzeichnet, daß sie aus einer oder mehreren Glasscheiben bestehen, auf denen erfindungsgemäß einzusetzende Gelbildner angebracht und getrocknet wurden.

6. Brandschutzverbundgläser nach Anspruch 4, enthaltend Gele mit weniger als 50 Gew.-% Wasser.

7. Brandschutzverbundgläser nach Ansprüchen 4 und 6, enthaltned Gele mit 20 bis 40 Gew.-% Wasser.

8. Verfahren zur Herstellung von Brandschutzgläsern bzw. Brandschutzverbundgläsern nach Anspruch 1, dadurch gekennzeichnet, daß man den einzusetzenden Gelbildner zwischen den Glasscheiben eines aus zwei oder mehreren Scheiben bestehenden Verbundes durch 3- bis 80-stündiges Erwärmen auf eine oder mehrere Temperaturen im Bereich von 45 bis 120°C gelieren läßt.

9. Brandschutzverbundglaskonstruktionen, enthaltend mindestens eine Floatglasscheibe und mindestens eine Schicht des in Anspruch 1 definierten wasserhaltigen oder getrockneten Gelbildners bzw. Gels.

## Claims

1. Fireproof glasses containing gels free from organic gel formers, characterised in that they have been produced using gel formers which contain
a) acidic aluminium phosphates, optionally in the form of reaction products together with 0.01 to 4 mol of alkanolamines per mol of aluminium phosphate and
b) reaction products of boric acid and alkanolamines,
wherein a) and b), calculated as solids, are in the weight ratio of from 100:55 to 100:0.5 and the gel formers contain from 0.5 to 85 wt.% of water and aluminium, boron, phosphorus and alkanolamine, in particular monoethanolamine, in atomic or molar proportions of
| Al | B | P | alkanolamine |
|---|---|---|---|
| 1 | 1.2 to 1.8 | 2.3 to 3.7 | 2.3 to 3.7 |

2. Fireproof glasses according to claim 1, characterised in that the gel formers and gels contain surfactants, bonding agents, colorants, pore nucleating agents, fillers, light stabilisers, antioxidants and/or reinforcing agents.

3. Fireproof glasses according to claims 1 and 2, characterised in that they contain gels in dried form.

4. Fireproof glasses according to claims 1 and 2, characterised in that they contain gels in hydrous form.

5. Fireproof glasses according to claims 1 to 4, characterised in that they consist of one or more sheets of glass, to which gel formers used according to the invention are applied and dried.

6. Fireproof glasses according to claim 4, containing gels having less than 50 wt.% water.

7. Fireproof glasses according to claims 4 and 6, containing gels having from 20 to 40 wt.% water.

8. Method for the production of fireproof glasses or composite fireproof glasses according to claim 1, characterised in that the gel former used is caused to gel between the glass sheets of a composite consisting of two or more sheets by heating for 3 to 80 hours at one or more temperatures in the range of from 45 to 120°C.

9. Composite fireproof glass constructions, containing at least one sheet of float glass and at least one layer of the hydrous or dried gel former or gel specified in Claim 1.

## Revendications

1. Verres résistants au feu contenant des gels exempts de gélifiants organiques, caractérisés en ce qu'ils ont été préparés avec des gélifiants contenant
a) des phosphates acides d'aluminium, facultativement sous la forme de produits de réaction avec 0,01 à 4 moles d'alcanolamines par mole de phosphate d'aluminium, et
b) des produits de la réaction de l'acide borique avec des alcanolamines,
a) et b), comptés comme solides, se trouvant dans un rapport pondéral de 100:55 à 100:0,5 et les gélifiants contenant 0,5 à 85 % en poids d'eau, et de l'aluminium, du bore, du phosphore et une alcanolamine, en particulier la monoéthanolamine, dans des rapports atomiques ou molaires de
| Al | B | P | alcanolamine |
|---|---|---|---|
| 1 | 1,2 à 1,8 | 2,3 à 3,7 | 2,3 à 3,7. |

2. Verres résistants au feu selon la revendication 1, caractérisés en ce que les gélifiants ou les gels contiennent des tensio-actifs, des agents adhésifs, des colorants, des agents de poronucléation, des charges, des agents de photoprotection, des anti-oxydants et/ou des agents de renforcement.

3. Verres résistants au feu selon les revendications 1 et 2, caractérisés en ce qu'ils contiennent des gels à l'état sec.

4. Verres feuilletés résistants au feu selon les revendications 1 et 2, caractérisés en ce qu'ils contiennent des gels sous forme hydratée.

5. Verres feuilletés résistants au feu selon les revendications 1 à 4, caractérisés en ce qu'ils comprennent une ou plusieurs feuilles de verre sur lesquelles les gélifiants à mettre en oeuvre selon l'invention ont été appliqués et séchés.

6. Verres feuilletés résistants au feu selon la revendication 4, contenant des gels dont la teneur en eau est inférieure à 50 % en poids.

7. Verres feuilletés résistants au feu selon les revendications 4 et 6, contenant des gels dont la teneur en eau va de 20 à 40 % en poids.

8. Procédé de préparation de verres résistants au feu ou de verres feuilletés résistants au feu selon la revendication 1, caractérisé en ce que le gélifiant à mettre en oeuvre est gélifié entre les feuilles de verre d'un verre sandwich comprenant deux ou plusieurs feuilles, en le chauffant 3 à 80 heures à une ou plusieurs températures comprises dans une plage allant de 45 à 120 °C.

9. Assemblages de verre feuilleté résistant au feu, comprenant au moins une feuille de verre flotté et au moins une couche du gélifiant ou du gel, hydraté ou sec, défini à la revendication 1.
